# EUROPEAN PATENT SPECIFICATION

(11) **EP 3 080 448 B1**
(45) Date of publication and mention of the grant of the patent: **14.02.2018**
(21) Application number: 14811761.7
(22) Date of filing: 08.12.2014
(51) Int. Cl.: F03D 13/00, F03D 80/50, F03D 80/60

(54) **A WIND TURBINE COMPRISING A HEAT EXCHANGER AND METHOD FOR HANDLING SAID HEAT EXCHANGER**
WINDTURBINE MIT EINEM WÄRMETAUSCHER UND VERFAHREN ZUR HANDHABUNG DIESES WÄRMETAUSCHERS
ÉOLIENNE COMPRENANT UN ÉCHANGEUR DE CHALEUR ET PROCÉDÉ DE MANIPULATION DUDIT ÉCHANGEUR DE CHALEUR

(30) Priority: 09.12.2013 DK 201370755
(43) Date of publication of application: 19.10.2016
(73) Proprietor: Vestas Wind Systems A/S, 8200 Aarhus N (DK)
(72) Inventor: NYVAD, Jesper, DK-8250 Egå (DK)
(74) Representative: Vestas Patents Department
(86) International application number: PCT/DK2014/050419
(87) International publication number: WO 2015/086026

(56) References cited:
- EP-A1- 1 798 414
- EP-A1- 2 325 485
- WO-A2-2010/085963
- CN-A- 102 269 134

## Description

### TECHNICAL FIELD

The invention relates to a wind turbine with a rotor connected to a generator provided at the top of a tower, the wind turbine comprising a heat generating component and a cooling circuit for removing heat from the heat generating component, the cooling circuit comprising a heat exchanger mounted to the tower. The invention also relates to a method for handling a heat exchanger mounted to the tower of a wind turbine.

### BACKGROUND OF THE INVENTION

Modern large wind turbines are usually provided as so called horizontal axis wind turbines. A horizontal axis wind turbine has a rotor with one or more blades that rotate, driven by the wind, around a substantially horizontal axis. The rotor is connected to a generator housed in a nacelle which is mounted to the top of a vertical tower.
A large wind turbine usually includes a number of heat generating components, such as a transformer and converter, and one or more cooling systems for removing heat from the heat generating components. The cooling systems can include one or more heat exchangers arranged to emit heat to external air. In many turbine models, such heat exchangers are mounted on the nacelle.
However, if the heat generating components are provided in the tower, it might be advantageous to mount the heat exchangers to the external wall of the tower, such as in DE10352023 or EP1798414A1. For effective cooling the heat exchangers should preferably be mounted at a considerable height up from the ground or a foundation platform at the tower bottom. Thereby, tower mounted heat exchangers can pose problems to the access for service personnel to service, repair or replace the heat exchangers. Providing external ladders or stairs introduces extra costs, and it also introduces safety issues for the service staff that have to be taken into consideration.

### SUMMARY

It is an object of the invention to facilitate service, repair and replacement of heat exchangers mounted on wind turbine towers.

This object is reached with a wind turbine with a rotor connected to a generator provided at the top of a tower, the wind turbine comprising a heat generating component and a cooling circuit for removing heat from the heat generating component, the cooling circuit comprising a heat exchanger mounted to the tower, and a first conduit for conducting a cooling medium from the heat generating component to the heat exchanger, characterised in that the heat exchanger is mounted to the tower such that it can be displaced vertically along the tower, and in that the first conduit presents a flexible portion or a disconnection arrangement.

The heat exchanger is preferable mounted externally of the tower. Since the heat exchanger can be vertically displaced along the tower, it can be moved so as to be accessible for service, repair or replacement. The invention provides a cost effective and safe solution for access of the heat exchanger where it is mounted at a height that is unreachable from any position accessible to a person, whether it's on the ground, or on a foundation or an external platform of the wind turbine.

Preferably, the cooling circuit comprises a second conduit for conducting the cooling medium from the heat exchanger to the heat generating component, the second conduit presenting a flexible portion or a disconnection arrangement.

Preferably, the wind turbine comprises a control arrangement for controlling the vertical displacement of the heat exchanger. Preferably, the control arrangement is permanently installed for controlling the vertical displacement of the heat exchanger. As exemplified below, it can comprise a rope fixed to the heat exchanger and extended over a pulley fixed to the tower above the heat exchanger. Alternatively, as also exemplified below, the control arrangement could comprise a remotely controlled electric motor fixed to the heat exchanger, which controls the vertical displacement by engagement of a rotating member with the tower or a part connected to the tower.

Preferably, the wind turbine comprises a guide rail for guiding the heat exchanger when it is vertically displaced along the tower. Preferably, the guide rail is fixed to the tower. Preferably, the guide rail extends in a vertical direction. Thereby, the path of the heat exchanger can be effectively controlled during the vertical displacement thereof.

Where the first conduit and/or the second conduit present a flexible portion, this portion is preferably provided on the external side of the tower. The flexible portion could be elongated. The flexible portion could be made in any suitable material providing the flexibility needed for allowing the heat exchanger vertical displacement without disconnection of the conduit, while having the durability needed for the environment in which the wind turbine is installed.

Elongated flexible portions of the first and second conduits provide for the heat exchanger to be vertically displaced while remaining connected to the heat generating component due to flexing of the first and second conduits. Thereby, the heat exchanger can be vertically displaced for service, etc., with any concern by the service staff for the connection to the heat generating component. This will substantially simplify operations by service staff to the heat exchanger.

It should be noted that where both the first conduit and the second conduit present a flexible portion, the two flexible portions could be connected together along the portions.

Where the first conduit and/or the second conduit present a disconnection arrangement, the latter is preferably remotely controllable, so that a disconnection of the conduit can be effected before the vertical displacement of the heat exchanger. For example, the disconnection arrangement can comprise a remotely manoeuvrable release mechanism. As exemplified below, such an effective remote control can be provided by a rope connected to a lever which releases the heat exchanger from the conduit. As also exemplified below, preferably a valve is provided to shut off the cooling medium flow in the conduit before disconnection thereof.

It should be noted that one of the first and second conduits could present a flexible portion while the other of the first and second conduits presents a disconnection arrangement.

The invention is suitable where the heat generating component is placed in the tower. However, it could be used also where the heat generating component is placed in the nacelle. The heat generating component could be any kind of electrical or mechanical item in the wind turbine, for example, a transformer or a converter.

It should be noted that where there are more than one heat exchanger in the cooling circuit, they can be placed at different locations on the tower exterior. For example, they can be at the same height, but distributed equally spaced circumferentially around the tower. Further, where there is a plurality of heat exchangers, these can be connected in series or in parallel.

The tower, which could be made of any suitable material, such as steel or concrete, can be hollow, provided with a tubular shape or a shape of a truncated cone, and presenting a tower wall with an internal and an external side. Thereby, the heat exchanger can be mounted to the tower such that it can be vertically displaced along the tower wall. It should be noted that the tower could also be a lattice tower. Thereby, the heat exchanger can be mounted to the tower such that it can be displaced along a vertical member of the lattice framework.

The cooling medium could be a liquid, e.g. a coolant liquid, or a gas, e.g. air. The first and second conduits are preferably arranged to conduct the cooling medium from the heat generating component to the heat exchanger through the tower wall.

It should be noted that the invention is suitable to a horizontal axis wind turbine, but could be used for a vertical axis wind turbine as well.

The object is also reached with a method for handling a heat exchanger mounted to the tower of a wind turbine comprising a heat generating component and a cooling circuit for removing heat from the heat generating component, the cooling circuit comprising, in addition to the heat exchanger, a first conduit for conducting a cooling medium from the heat generating component to the heat exchanger, wherein the method comprises shutting off, by means of a valve, the cooling medium flow in the first conduit, subsequently disconnecting the first conduit, and subsequently displacing the heat exchanger vertically along the tower. Preferably, the cooling circuit comprises a second conduit for conducting the cooling medium from the heat exchanger to the heat generating component, and the method further comprises shutting off, by means of a valve, the cooling medium flow in the second conduit, subsequently disconnecting the second conduit, and subsequently performing said step of displacing the heat exchanger vertically along the tower.

### DESCRIPTION OF FIGURES

Below embodiments of the invention will be described with reference to the drawings, in which
- fig. 1 shows a perspective view of a wind turbine according to an embodiment of the invention, with parts hidden by other parts indicated with broken lines,
- fig. 2 is a perspective view of a portion of the wind turbine in fig. 1, with parts hidden by other parts indicated with broken lines,
- fig. 3 is an enlargement of a portion the view in fig. 2, with parts hidden by other parts indicated with broken lines,
- fig. 4 and fig. 5 are views similar to the view in fig. 3, showing alternative embodiments of the invention, and
- fig. 6 is a perspective view of a part of a wind turbine according to a further embodiment of the invention.

### DETAILED DESCRIPTION

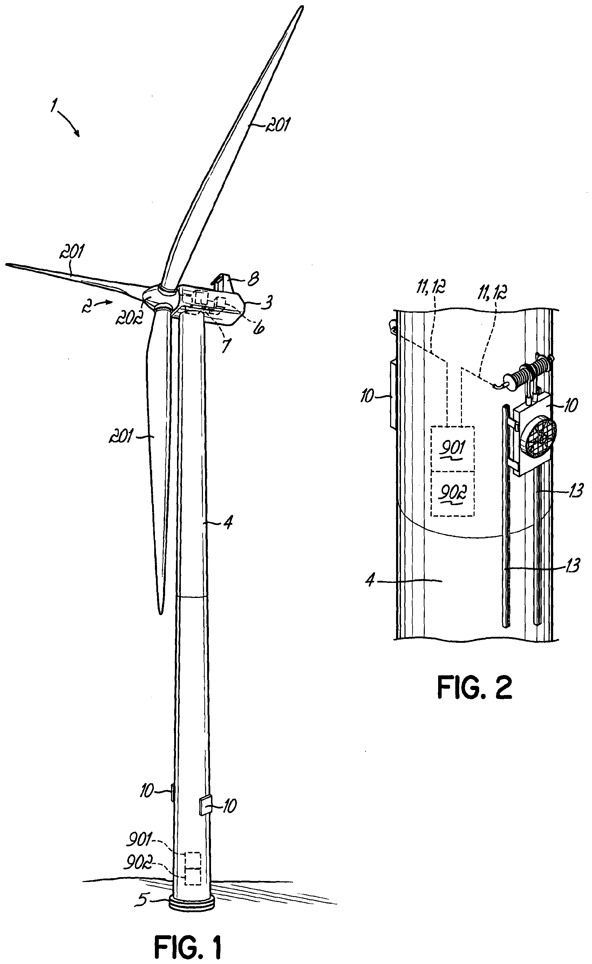

Fig. 1 shows a wind turbine 1 with a rotor 2 presenting a number of blades 201 and a hub 202 to which the blades are mounted. The wind turbine comprises a nacelle 3 provided at the top of a tower 4. The tower is supported by a foundation 5 arranged in the ground. The nacelle 3 houses a generator 6 to which the rotor 2 is connected via a gearbox 7. The gearbox 7 and generator 6 generate heat during operation, and for this a cooling system including a heat exchanger 8 on the nacelle exterior is provided.

Inside the tower 4, close to the bottom of it, two heat generating components 901, 902 are provided in the form of an electric converter 901 and a transformer 902. A cooling circuit is provided for removing heat from the converter 901 and the transformer 902. The cooling circuit comprises two heat exchangers 10 mounted to the tower, externally thereof. As indicated in fig. 2, the cooling circuit also comprises conduits 11, 12 for conducting a cooling medium, in the form of a cooling liquid, between the heat exchangers 10 and the converter 901 and the transformer 902.

As described closer below, the heat exchangers 10 are mounted to the tower 4 such that they can individually be vertically displaced along the tower along guide rails 13, and the conduits 11, 12 each present a flexible portion. In normal operation of the wind turbine, the heat exchangers 10 are located at a height that is unreachable for service personnel from the foundation 5. With the heat exchanger vertical displacement possibility, the heat exchangers can be individually lowered to a height where they are accessible for service, repair or replacement.

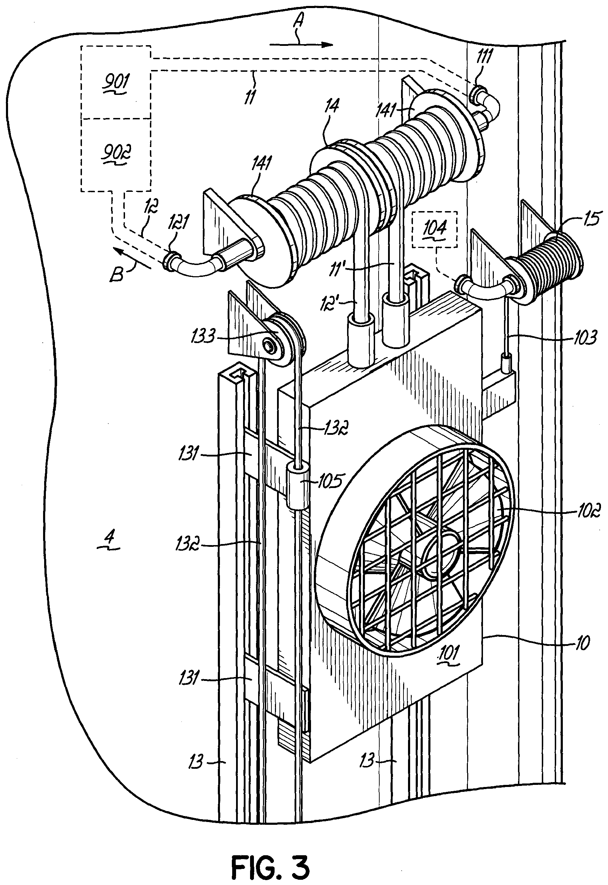

Reference is made to fig. 3. Each heat exchanger 10 comprises, as is known per se, conduits (not shown) which are adapted to guide the cooling liquid and are exposed to surrounding air such that heat is exchanged from the cooling liquid to the air. These conduits are housed in a frame 101. A fan 102 is mounted to the frame 101 to force air to pass the conduits inside the frame. The fan is driven by an electric motor (not shown) which in turn is powered by an electrical lead 103 connected to a power source 104.

The conduits 11, 12, for conducting the cooling liquid between the heat exchangers 10 and the converter 901 and the transformer 902, comprises a first conduit 11 for conducting the cooling medium from the converter 901 and the transformer 902 to the heat exchanger 10, and a second conduit 12 for conducting the cooling medium from the heat exchanger 10 to the converter 901 and the transformer 902, as indicated by the arrows A and B.

There are two guide rails 13 per heat exchanger 10, and they are fixed to the tower 4. Shoes 131 are fixed to the heat exchanger 10, and engage the guide rails so that they can move with the heat exchanger along the guide rails.

For controlling the vertical displacement of the heat exchanger 10 a control arrangement is provided. The control arrangement comprises a rope 132 which is fixed to the heat exchanger 10 at a bracket 105 thereof. The rope 132 extends over a pulley 133 which is fixed to the tower above the heat exchanger 10. Thereby, a person can with use of the rope 132 stand on the foundation 5 (fig. 1) and lower or raise the heat exchanger 10, which thereby is guided by the guide rails 13.

Non-flexible parts of the first and second conduits 11, 12 extend through respective openings 111, 121 in a wall of the tower 4, to a conduit reeling device 4 which is fixed to the tower, externally thereof. The flexible portions 11' and 12' of the first and second conduits 11, 12 are provided on the external side of the tower, and extend from the conduit reeling device 14 to the heat exchanger 10. The conduit reeling device 14 comprises two coaxial drums 141 which are fixed to each other. The flexible portions 11' and 12' of the first and second conduits 11, 12 are held wound onto a respective of the drums by a spring recoil device (not shown) of the reeling device.

Thus, when the heat exchanger 10 is lowered, it pulls the flexible portions 11' and 12' of the first and second conduits 11, 12 off the drums 141. When the heat exchanger 10 is, by control of the rope 132, moved back up to the operation position, the spring recoil device of the conduit reeling device 14 pulls the flexible portions 11' and 12' of the first and second conduits 11, 12 back and winds them onto the respective drums 141. Thereby no consideration needs to be had for the conduits 11, 12 when the heat exchanger 10 is lowered or raised.

As also indicated in fig. 3, a lead reeling device 15 is arranged to wind a flexible part of the lead 103, for the heat exchanger fan 102, in the same manner as the conduit reeling device 14 winds the flexible portions 11' and 12' of the first and second conduits 11, 12.

As an alternative to the spring recoil device, an electric motor can be provided for turning the drums 141 for unwinding and winding the flexible portions 11' and 12' of the first and second conduits 11, 12. The electric motor could be controllable from a terminal close to the tower foundation 5 (fig. 1).

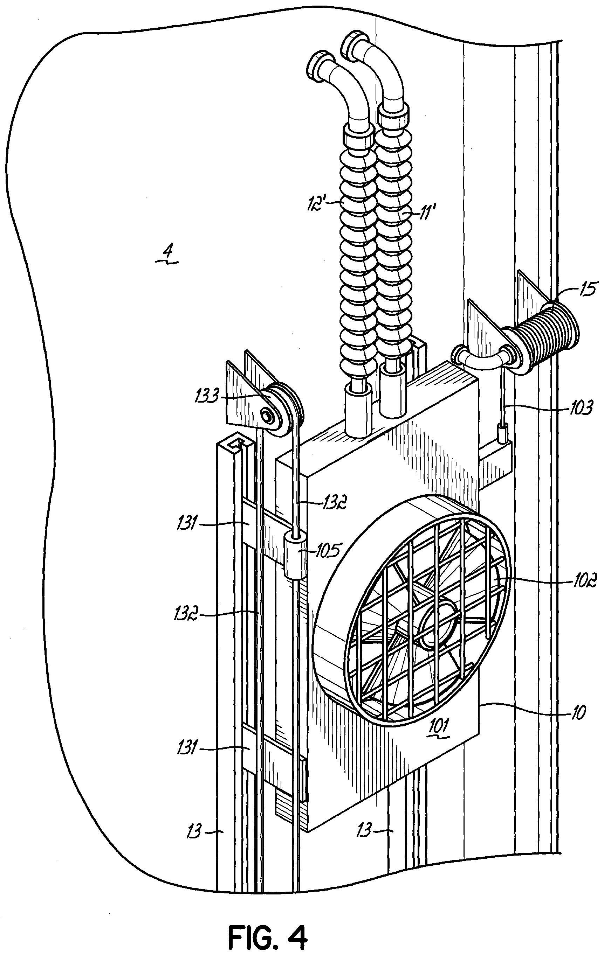

The flexible portions 11' and 12' of the first and second conduits 11, 12 can be provided as hoses. Alternatively, as shown in fig. 4, the flexible portions 11' and 12' of the first and second conduits can be provided as bellows, which can expand when the heat exchanger 10 is lowered. Thereby, no reeling device 14 is needed.

The flexible portions 11' and 12' of the first and second conduits 11, 12 can be made in any suitable material, such as nylon, polyurethane, polyethylene, PVC, or synthetic or natural rubber, providing the flexibility needed, while having the durability needed for the environment in which the wind turbine is installed.

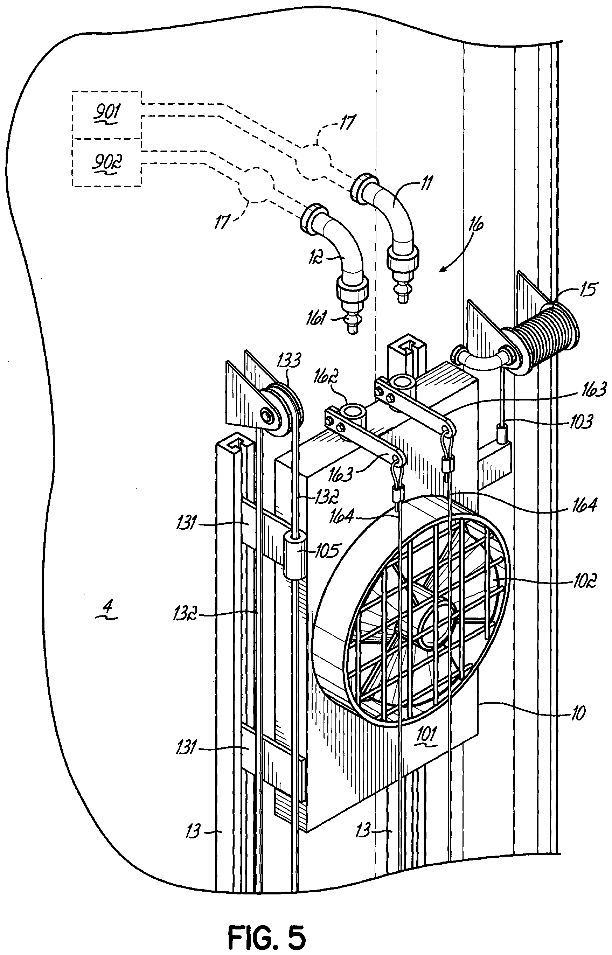

Reference is made to fig. 5. In this embodiment, the first and second conduits 11, 12 present a disconnection arrangement 16, with which each of the conduits 11, 12 can be disconnected from the heat exchanger, when the latter is lowered as described above. The disconnection arrangement comprises for each conduit 11, 12 a connector comprising a male part 161 and a female part 162. Each female part is fixed to the heat exchanger 10, and comprises an internal locking mechanism to retain the male part 161. Each locking mechanism can be controlled by a lever 163 and a rope 164 hanging from a free end of the lever 163. Each rope can be reached from the foundation 5 (fig. 1) and by pulling it, the respective locking mechanism releases the respective male part 161, so that the respective conduit 11, 12 is disconnected, and the heat exchanger can be lowered as described above.

For each conduit 11, 12 a valve is provided to shut off the cooling liquid flow in the respective conduit before disconnection thereof. Thus, before lowering the heat exchanger, the cooling liquid flows in the conduits 11, 12 are shut off by means of the valves 17, and subsequently, the conduits 11, 12 are disconnected with the disconnection arrangement 16.

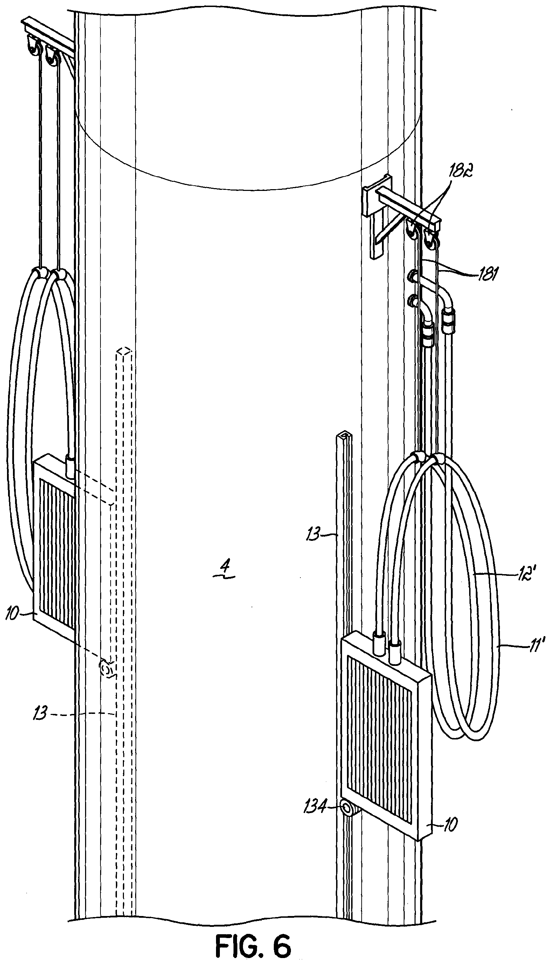

Fig. 6 shows a further embodiment, in which the heat exchangers 10 are oriented so as for their planes to extend perpendicularly from the tower wall. The heat exchangers are passive coolers, i.e. there are no fans for forcing an air flow through the heat exchangers. Each heat exchanger 10 is mounted to the tower 4 via a vertical guide rail 13 which is fixed to the tower 4. A control arrangement for displacing the heat exchanger 10 vertically along the tower comprises a remotely controlled electric motor 134. Each electric motor 134 is fixed to the respective heat exchanger 10, and it controls the vertical displacement by engagement of a rotating member with the guide rail 13.

As in the embodiment described above with reference to fig. 3, conduits for transporting cooling liquid between the heat exchangers 10 and heat generating components present flexible portions 11' and 12'. Each of the flexible conduit portions 11', 12' is held with a respective rope 181 which is supported by a respective rope reeling device 182, in turn fixed to the tower 4 above the respective heat exchanger 10. Reach rope reeling device 182 has a respective spring recoil device biasing the ropes to be wound up on the respective rope reeling device 182. When the heat exchangers 10 are raised and in their operation positions, the lengths of the flexible conduit portions 11', 12' are superfluous, and these portions 11', 12' are stored forming one or more loops suspended from the ropes 181. However, when a heat exchanger is lowered, e.g. for service, the flexible conduit portions 11', 12' are pulled downwards whereby they are straightened, while the ropes 181 are wound off from the rope reeling devices 182. When the heat exchanger 10 is raised again, the ropes 181 are reeled in taking the flexible conduit portions 11', 12' with them.

## Claims

1. A wind turbine with a rotor connected to a generator provided at the top of a tower, the wind turbine comprising a heat generating component and a cooling circuit for removing heat from the heat generating component, the cooling circuit comprising a heat exchanger mounted to the tower, and a first conduit for conducting a cooling medium from the heat generating component to the heat exchanger, **characterised in that** the heat exchanger is mounted to the tower such that it can be displaced vertically along the tower, and **in that** the first conduit presents a flexible portion or a disconnection arrangement.

2. A wind turbine according to claim 1, wherein the cooling circuit comprises a second conduit for conducting the cooling medium from the heat exchanger to the heat generating component, the second conduit presenting a flexible portion or a disconnection arrangement.

3. A wind turbine according to any one of the preceding claims, comprising a control arrangement for controlling the vertical displacement of the heat exchanger.

4. A wind turbine according to claim 3, wherein the control arrangement is permanently installed for controlling the vertical displacement of the heat exchanger.

5. A wind turbine according to any one of the preceding claims, comprising a guide rail for guiding the heat exchanger when it is vertically displaced along the tower.

6. A wind turbine according to claim 5, wherein the guide rail is fixed to the tower.

7. A wind turbine according to any one of claims 5-6, wherein the guide rail extends in a vertical direction.

8. A wind turbine according to any one of the preceding claims, wherein, where the first conduit presents a flexible portion, this portion is provided on the external side of the tower.

9. A wind turbine according to any one of the preceding claims, wherein, where the first conduit presents a disconnection arrangement, the latter is remotely controllable.

10. A wind turbine according to any one of the preceding claims, wherein, where the first conduit presents a disconnection arrangement, a valve is provided to shut off the cooling medium flow in the conduit before disconnection thereof.

11. A method for handling a heat exchanger mounted to the tower of a wind turbine comprising a heat generating component and a cooling circuit for removing heat from the heat generating component, the cooling circuit comprising, in addition to the heat exchanger, a first conduit for conducting a cooling medium from the heat generating component to the heat exchanger, wherein the method comprises shutting off, by means of a valve, the cooling medium flow in the first conduit, subsequently disconnecting the first conduit, and subsequently displacing the heat exchanger vertically along the tower.

12. A method according to claim 11, wherein the cooling circuit comprises a second conduit for conducting the cooling medium from the heat exchanger to the heat generating component, and the method further comprises shutting off, by means of a valve, the cooling medium flow in the second conduit, subsequently disconnecting the second conduit, and subsequently performing said step of displacing the heat exchanger vertically along the tower.

## Patentansprüche

1. Windturbine mit einem Rotor, der mit einem oben auf einem Turm angebrachten Generator verbunden ist, wobei die Windturbine eine wärmeerzeugende Komponente und einen Kühlkreislauf zum Abführen von Wärme von der wärmeerzeugenden Komponente umfasst, wobei der Kühlkreislauf einen an dem Turm montierten Wärmetauscher und eine erste Leitung zum Leiten eines Kühlmediums von der wärmeerzeugenden Komponente zu dem Wärmetauscher umfasst, **dadurch gekennzeichnet, dass** der Wärmetauscher so an dem Turm montiert ist, dass er vertikal an dem Turm entlang verlagert werden kann, und dadurch, dass die erste Leitung einen flexiblen Teil oder eine Abkopplungsanordnung umfasst.

2. Windturbine nach Anspruch 1, wobei der Kühlkreislauf eine zweite Leitung zum Leiten des Kühlmediums von dem Wärmetauscher zu der wärmeerzeugenden Komponente umfasst, wobei die zweite Leitung einen flexiblen Teil oder eine Abkopplungsanordnung aufweist.

3. Windturbine nach einem der vorhergehenden Ansprüche, umfassend eine Steueranordnung zur Steuerung der vertikalen Verlagerung des Wärmetauschers.

4. Windturbine nach Anspruch 3, wobei die Steueranordnung dauerhaft installiert ist, um die vertikale Verlagerung des Wärmetauschers zu steuern.

5. Windturbine nach einem der vorhergehenden Ansprüche, umfassend eine Führungsschiene zum Führen des Wärmetauschers, wenn er vertikal an dem Turm entlang verlagert wird.

6. Windturbine nach Anspruch 5, wobei die Führungsschiene an dem Turm befestigt ist.

7. Windturbine nach einem der Ansprüche 5-6, wobei die Führungsschiene sich in vertikaler Richtung erstreckt.

8. Windturbine nach einem der vorhergehenden Ansprüche, wobei, wo die erste Leitung einen flexiblen Teil aufweist, dieser Teil an der Außenseite des Turms angebracht ist.

9. Windturbine nach einem der vorhergehenden Ansprüche, wobei, wo die erste Leitung eine Abkopplungsanordnung aufweist, letztere fernsteuerbar ist.

10. Windturbine nach einem der vorhergehenden Ansprüche, wobei, wo die erste Leitung eine Abkopplungsanordnung aufweist, ein Ventil angebracht ist, um den Kühlmediumstrom in der Leitung vor deren Abkopplung abzuschließen.

11. Verfahren zur Handhabung eines Wärmetauschers, der am Turm einer Windturbine montiert ist, die eine wärmeerzeugende Komponente und einen Kühlkreislauf zum Abführen von Wärme von der wärmeerzeugenden Komponente umfasst, wobei der Kühlkreislauf, zusätzlich zu dem Wärmetauscher, eine erste Leitung zum Leiten eines Kühlmediums von der wärmeerzeugenden Komponente zu dem Wärmetauscher umfasst, wobei das Verfahren das Abschließen, mittels eines Ventils, des Kühlmediumstroms in der ersten Leitung, danach Abkoppeln der ersten Leitung, und danach Verlagern des Wärmetauschers vertikal an dem Turm entlang umfasst.

12. Verfahren nach Anspruch 11, wobei der Kühlkreislauf eine zweite Leitung zum Leiten des Kühlmediums von dem Wärmetauscher zu der wärmeerzeugenden Komponente umfasst, und das Verfahren weiter das Abschließen, mittels eines Ventils, des Kühlmediumstroms in der zweiten Leitung, danach Abkoppeln der zweiten Leitung, und danach Durchführen des Schritts der Verlagerung des Wärmetauschers vertikal an dem Turm entlang umfasst.

## Revendications

1. Eolienne avec un rotor connecté à un générateur fourni sur le dessus d'un mât, l'éolienne comprenant un composant de génération de chaleur et un circuit de refroidissement pour retirer la chaleur du composant de génération de chaleur, le circuit de refroidissement comprenant un échangeur de chaleur monté sur le mât, et un premier conduit pour conduire un agent de refroidissement du composant de génération de chaleur à l'échangeur de chaleur, **caractérisée en ce que** l'échangeur de chaleur est monté sur le mât de sorte qu'il puisse être déplacé verticalement le long du mât, et **en ce que** le premier conduit présente une partie flexible ou un agencement de déconnexion.

2. Eolienne selon la revendication 1, dans laquelle le circuit de refroidissement comprend un second conduit pour conduire l'agent de refroidissement de l'échangeur de chaleur au composant de génération de chaleur, le second conduit présentant une partie flexible ou un agencement de déconnexion.

3. Eolienne selon l'une quelconque des revendications précédentes, comprenant un agencement de commande pour la commande du déplacement vertical de l'échangeur de chaleur.

4. Eolienne selon la revendication 3, dans laquelle l'agencement de commande est installé de manière permanente pour la commande du déplacement vertical de l'échangeur de chaleur.

5. Eolienne selon l'une quelconque des revendications précédentes, comprenant un rail de guidage pour le guidage de l'échangeur de chaleur lorsqu'il est déplacé verticalement le long du mât.

6. Eolienne selon la revendication 5, dans laquelle le rail de guidage est fixé au mât.

7. Eolienne selon l'une quelconque des revendications 5 à 6, dans laquelle le rail de guidage s'étend dans une direction verticale.

8. Eolienne selon l'une quelconque des revendications précédentes, dans laquelle, si le premier conduit présente une partie flexible, cette partie est fournie sur le côté externe du mât.

9. Eolienne selon l'une quelconque des revendications précédentes, dans laquelle, si le premier conduit présente un agencement de déconnexion, ce dernier peut être commandé à distance.

10. Eolienne selon l'une quelconque des revendications précédentes, dans laquelle, si le premier conduit présente un agencement de déconnexion, une valve est fournie pour arrêter le flux d'agent de refroidissement dans le conduit avant sa déconnexion.

11. Procédé de manipulation d'un échangeur de chaleur monté sur le mât d'une éolienne comprenant un composant de génération de chaleur et un circuit de refroidissement pour retirer de la chaleur du composant de génération de chaleur, le circuit de refroidissement comprenant, outre l'échangeur de chaleur, un premier conduit pour conduire un agent de refroidissement du composant de génération de chaleur à l'échangeur de chaleur, dans lequel le procédé comprend l'arrêt, à l'aide d'une valve, du flux d'agent de refroidissement dans le premier conduit, ensuite la déconnexion du premier conduit, et ensuite le déplacement de l'échangeur de chaleur verticalement le long du mât.

12. Procédé selon la revendication 11, dans lequel le circuit de refroidissement comprend un second conduit pour conduire l'agent de refroidissement de l'échangeur de chaleur au composant de génération de chaleur, et le procédé comprend en outre l'arrêt, à l'aide d'une valve, du flux d'agent de refroidissement dans le second conduit, ensuite la déconnexion du second conduit, et ensuite la réalisation de ladite étape de déplacement de l'échangeur de chaleur verticalement le long du mât.
